# EUROPÄISCHE PATENTSCHRIFT

(11) **EP 3 832 512 B1**
(45) Veröffentlichungstag und Bekanntmachung des Hinweises auf die Patenterteilung: **28.01.2026**
(21) Anmeldenummer: 20211009.4
(22) Anmeldetag: 01.12.2020
(51) Int. Cl.: G06F 21/62

(54) **MASCHINELLES LERNVERFAHREN FÜR EINE DATENSCHUTZANALYSE**
MACHINE LEARNING PROCEDURE FOR A DATA PROTECTION ANALYSIS
PROCÉDURE D'APPRENTISSAGE MACHINE POUR UNE ANALYSE DE PROTECTION DES DONNÉES

(30) Priorität: 05.12.2019 DE 102019133137
(43) Veröffentlichungstag der Anmeldung: 09.06.2021
(73) Patentinhaber: Deutsche Telekom AG, 53113 Bonn (DE)
(72) Erfinder: MEINEL, Joanna, 53121 Bonn (DE)
(74) Vertreter: karo IP

(56) Entgegenhaltungen:
- US-A1- 2017 177 907
- ALONI COHEN ET AL: "Towards Formalizing the GDPR's Notion of Singling Out", ARXIV.ORG, CORNELL UNIVERSITY LIBRARY, 201 OLIN LIBRARY CORNELL UNIVERSITY ITHACA, NY 14853, 12 April 2019 (2019-04-12), XP081168366
- YEOM SAMUEL ET AL: "Privacy Risk in Machine Learning: Analyzing the Connection to Overfitting", 2018 IEEE 31ST COMPUTER SECURITY FOUNDATIONS SYMPOSIUM (CSF), IEEE, 9 July 2018 (2018-07-09), pages 268 - 282, XP033382340, DOI: 10.1109/CSF.2018.00027
- MATHIEU N GALTIER ET AL: "Substra: a framework for privacy-preserving, traceable and collaborative Machine Learning", ARXIV.ORG, CORNELL UNIVERSITY LIBRARY, 201 OLIN LIBRARY CORNELL UNIVERSITY ITHACA, NY 14853, 25 October 2019 (2019-10-25), XP081520905

## Beschreibung

Die Erfindung betrifft ein Verfahren sowie ein System zur automatisierten Überprüfung der Qualität von pseudonymisierten Datensätzen, insbesondere von Personendaten mit sensiblen Informationen.

Hierbei wird in der Praxis zunächst ein erster Datensatz ursprünglich erhobener Originaldaten, insbesondere von Daten über Personen auf einer Rechnereinheit hinterlegt. Typischerweise sind in einem solchen Datensatz Personen bestimmte Attribute zugeordnet. Diese Attribute können in sogenannte Identifikatoren, Quasi-Identifikatoren und oder sensible Attribute unterteilt werden. Ein Eintrag des ersten Datensatzes könnte also wie folgt aussehen: Identifikator: Max Mustermann; Quasi-Identifikator "Alter": 29 Jahre; Quasi-Identifikator "Geschlecht": männlich; Quasi-Identifikator "Postleitzahl": 83321; sensibles Attribut "Krankheit": Grippe.

Aus diesen ersten Datensatz der Originaldaten wird ein zweiter Datensatz von pseudonymisierten Daten erzeugt, welcher vorzugsweise ebenfalls auf der Rechnereinheit hinterlegt wird. Die Pseudonymisierung soll die Originaldaten vorzugsweise in einer Art unkenntlich machen, dass der zweite Datensatz im Einklang mit der Datenschutzverordnung steht. Häufig stellt sich allerdings die Frage, ob der Datensatz der pseudonymisierten Daten diese Voraussetzungen wirklich erfüllt und eine ausreichende Güte bzw. Qualität aufweist.

In der Praxis werden hierzu Algorithmen verwendet, die teilweise aufwendig manuell aufbereitet werden müssen, um die Güte der pseudonymisierten Daten teilautomatisiert oder automatisiert, vorzugsweise auf der Rechnereinheit, zu überprüfen.

Die Qualität wird danach beurteilt, ob Informationen über Objekte des ursprünglichen Originaldatensatzes, vorzugsweise über Einzelpersonen, aus den pseudonymisierten Daten wieder hergeleitet werden können. Bei einer manuellen Datenschutzprüfung werden nicht die Originaldaten selbst, sondern nur die Datenattribute herangezogen. Bei der menschlichen Beurteilung auf der Attributebene werden Kriterien wie die sogenannte K- Anonymität geprüft. Eine solche manuelle Prüfung für jeden Einzelfall ist bei einer hohen Zahl von Attributen extrem zeitaufwendig und komplex, da insbesondere die Attribute bestimmt und gefunden werden müssen.

Zum besseren Verständnis sollen kurz einige im folgenden verwendete Begriffe erläutert werden:
In der Informatik wird unter Attribut die Definitionsebene für Merkmale verstanden. Als solche werden sie analytisch ermittelt, definiert und beschrieben sowie für einen bestimmten Objekttyp als Elemente seiner Struktur festgelegt ("modelliert"). Zur Verarbeitung der Daten können Attribute und Attributwerte mengeneinschränkend benutzt werden.

Die k-Anonymität ist ein formelles Datenschutzmodell, mit dem Aussagen über anonymisierte Datensätze getroffen werden können. Eine Veröffentlichung von Daten bietet k-Anonymität, falls die identifizierenden Informationen jedes einzelnen Individuums von mindestens k-1 anderen Individuen ununterscheidbar sind und somit eine korrekte Verknüpfung mit den zugehörigen sensiblen Attributen erschwert wird. Der Buchstabe k stellt somit einen Parameter dar, der im konkreten Fall durch eine natürliche Zahl ersetzt wird. Ein größeres k repräsentiert in diesem Kontext eine größere Anonymität.

Das Konzept der Anonymisierung mittels der k-Anonymität hat bekannte Mängel, die eine Deanonymisierung ermöglichen können. Das bedeutet, dass einzelne Teilnehmer einer k-anonymen Tabelle unter Umständen eindeutig identifizierbar sein können. Aus diesem Grund werden die pseudonymisierten Daten vor ihrer Freigabe zur weiteren Verwendung, beispielsweise vor einem Weiterverkauf an Unternehmen, auf ihre Güte hin analysiert.

Überanpassung (englisch "overfitting") bezeichnet in Computerwissenschaften eine bestimmte Anpassung eines Modells an einen vorgegebenen Datensatz. In der Statistik bedeutet Überanpassung die Spezifizierung eines Modells, das zu viele erklärende Variablen enthält. Generell gilt: Überanpassung ist als negativ zu beurteilen, weil die tatsächliche (geringere) Anpassungsgüte verschleiert wird und das Modell zwar besser auf die Daten der Stichprobe angepasst wird, allerdings aufgrund fehlender Generalität keine Übertragbarkeit auf die Grundgesamtheit besteht.

US 2002/0169793 A1 und US 2013/198194 A1 lehren in diesem Zusammenhang Verfahren, die verwendet werden können, um erhobene Datensätze zu pseudonymisieren. EP 1 550 967 A2 beschreibt ein Verfahren mit den nicht eindeutig identifizierbare Personen mithilfe von anderen Datensätzen zugeordnet und erkannt werden können.

US 2017/0177907 A1 lehrt ein computerimplementiertes System und Verfahren zur Verringerung des Re-Identifizierungsrisikos eines Datensatzes. Das Verfahren umfasst die folgenden Schritte: Abrufen eines Datensatzes aus einer Datenbank, die kommunikativ mit dem Prozessor verbunden ist, über einen Datenbankzugewandten Kommunikationskanal, wobei der Datensatz so ausgewählt ist, dass er medizinische Patientenaufzeichnungen enthält, die ein vorbestimmtes Kriterium erfüllen; Identifizieren von direkten Identifikatoren in dem Datensatz durch einen mit einem Speicher verbundenen Prozessor; Identifizieren von Quasi-Identifikatoren in dem Datensatz durch den Prozessor; Berechnen einer ersten Wahrscheinlichkeit einer Re-Identifizierung aus den direkten Identifizierern durch den Prozessor; Berechnen einer zweiten Wahrscheinlichkeit einer Re-Identifizierung aus den quasi-direkten Identifizierern durch den Prozessor; Stören des Datensatzes durch den Prozessor, wenn entweder die erste Wahrscheinlichkeit oder die zweite Wahrscheinlichkeit einen jeweiligen vorbestimmten Schwellenwert überschreitet, um einen gestörten Datensatz zu erzeugen; und Bereitstellen des gestörten Datensatzes über einen dem Benutzer zugewandten Kommunikationskanal an den Anforderer.

Es ist die technische Aufgabe der Erfindung ein Verfahren sowie ein System bereitzustellen, das den Zeitaufwand einer Überprüfung der Güte von pseudonymisierten Daten verringert und die Unsicherheit der Analyse verbessert.

Gelöst wird diese Aufgabe mit den Merkmalen der unabhängigen Ansprüche.

Es ist der Kern der Erfindung, dass das maschinelle Lernverfahren durch eine Überanpassung von Parametern, ein sogenanntes Overfitting, mögliche Attribute aus den pseudonymisierten Daten, insbesondere Quasi-Identifier, ermittelt und dass die Recheneinheit mittels eines Tests anhand der ermittelten Attribute die Qualität der pseudonymisierten Daten überprüft. Zweckmäßig läuft das maschinellem Lernverfahren automatisiert ab, wobei der zweite Datensatz der pseudonymisierten Daten als Input an das Lernverfahren übergeben wird.

Dies bietet den Vorteil, dass die Attribute eines Datensatzes nun nicht mehr in manueller aufwendiger Arbeit durch Mitarbeiter gefunden, ausgearbeitet und dann bezüglich der Qualität der Anonymisierung ausgewertet werden müssen. Dies bedingt nämlich nachteilig sowohl eine hohe Fehleranfälligkeit als auch einen großen Zeitaufwand. Überraschenderweise erweist sich hierzu die Überanpassung, also das Overfitting, des maschinellen Lernverfahrens als vorteilhaft zum Auffinden einer möglichst großen Vielzahl von Attributen, wohingegen die Überanpassung generell, wie vorstehend beschrieben, als nachteilig betrachtet wird.

In dem konkreten Kontext der Erfindung wird durch die Überanpassung allerdings gerade erst ermöglicht, dass eine möglichst große Anzahl von Attributen, insbesondere von Quasi-Identifikatoren, aufgefunden wird. Hierdurch wird zweckmäßigerweise sichergestellt, dass sich unter diesen aufgefundenen Quasi-Identifikatoren mit einer sehr hohen Sicherheit auch die "wahren" Quasi-Identifikatoren des Originaldatensatzes befinden. Um die Güte des pseudonymisierten Datensatzes durch den Algorithmus zu testen ist es nämlich besser zu viele Quasi-Identifikatoren als zu wenige Quasi-Identifikatoren in das Testmodell einfließen zu lassen.

Zweckmäßigerweise überprüft der Test, ob aus den ermittelten Attributen ein Rückschluss auf die Originaldaten möglich ist. Unter einem Rückschluss ist hierbei zu verstehen, dass die Attribute so kombiniert werden können, dass eine mögliche Kombination die Identifikation einer Person der Originaldaten ermöglichen. Hierzu werden zweckmäßiger Weise alle möglichen Kombinationen der ermittelten Attribute betrachtet und mit Einträgen aus den Originaldaten verglichen. Weißt eine solche Kombination eine Übereinstimmung mit einem Eintrag der Originaldaten auf, ist der Datenschutz einer solchen Person unter Umständen nicht mehr gewährleistet.

Vorzugsweise gilt der Test als bestanden, wenn die Originaldaten mit einer Trefferwahrscheinlichkeit von kleiner als 1/k, bezüglich einer k- Anonymität, identifiziert werden. Diese Schranke wird aus praktischen Erwägungen aufgestellt, dass unter Umständen nicht vermieden werden kann einen absoluten Datenschutz zu gewährleisten aber auf der anderen Seite trotzdem eine ausreichende Anonymität der Daten sichergestellt werden muss.

Bevorzugt bildet die Rechnereinheit eine sichere Datenschutzprüfumgebung aus. Dies gewährleistet, dass Unbefugte keinen Zugriff auf die Originaldaten und/oder die pseudonymisierten Daten erlangen können, wodurch der Datenschutz sichergestellt ist.

Zweckmäßigerweise weist die Rechnereinheit eine Schnittstelle zur Weiterleitung der pseudonymisierten Daten auf, wobei die pseudonymisierten Daten erst dann über die Schnittstelle weitergeleitet werden, wenn der Test als bestanden bewertet wird. Die entsprechenden Anforderungen können, individuell auf verschiedene Erfordernisse angepasst, hinterlegt und automatisiert durch die Rechnereinheit ausgewertet werden. Die Daten werden hierdurch also vorteilhaft nur dann an Unternehmen weitergeleitet bzw. verkauft, wenn ein ausreichender Datenschutz sichergestellt ist. Dies erweist sich auch für diese Unternehmen als Vorteil, da sich diese häufig über Medien dem Vorwurf ausgesetzt sehen, mit dem Datenschutz zu leichtfertig umzugehen. Dieser Vorwurf kann dadurch entkräftet werden, dass die Unternehmen darlegen nur geprüfte Daten aufgekauft zu haben, die vorher ein zuverlässiges Testverfahren zur Anonymisierung durchlaufen haben.

Vorzugsweise wird das Overfitting, insbesondere innerhalb eines Parameterbereichs eines bereitgestellten mathematischen Modells, maximal gewählt. Je "größer" das Overfitting ist, desto mehr Quasi-Identifikatoren können ermittelt werden. Dies erhöht in der Folge die Anzahl der möglichen Kombinationsmöglichkeiten der Quasi-Identifikatoren und bedingt dadurch, dass Daten aus dem zweiten Datensatz mit einer möglichst großen Wahrscheinlichkeit in dem ersten Datensatz aufgefunden werden, wenn diese darin enthalten tatsächlich enthalten sind.

Vor der Pseudonymisierung können die Attribute der Originaldaten im Hinblick auf ihre Aussagekraft von einem Algorithmus analysiert werden und gegebenenfalls vor der Pseudonymisierung bezüglich ihrer Anzahl reduziert werden. Hierzu können statistische Auswertungen einzelner Attribute und ihre Beziehung untereinander verwendet werden, um die "Datensparsamkeit" zu erhöhen.

Vorzugsweise können in der Datenschutzprüfumgebung statistische Werkzeuge auf die bereitgestellten Quelldaten angewendet werden. Ein möglicher Ablauf ist, dass jedes Attribut jeweils unabhängig voneinander auf seine Eigenschaften, wie beispielsweise die Anzahl der verschiedenen Ausprägungen, die Typen der Ausprägungen, die Werte der Ausprägungen, die Verteilung verschiedener Ausprägungen und/oder den Anteil fehlender Werte hin analysiert wird. Hierbei kann zuvor eine fachliche Einschätzung nötig sein, bei welchen Attributen welche Auswertung zulässig ist. Jedes Attribut wird auf seiner Aussagekraft hinsichtlich folgender anderer Attribute überprüft: Ein Target ("Ziel") einer Anforderungsseite, der Identifikator, mögliche Quasi-Identifikatoren und/oder mögliche quasi Quasi-Targets durch Berechnungen von Eigenschaften der Attributspaare beispielsweise mittels Korrelationen, Lorenz-Kurve und/oder des Gini-Index. Auch diese Auswertung kann wieder vollständig automatisiert auf der sicheren Datenschutzprüfumgebung ablaufen.

Zur Ausführung dieser Analyse werden als Input die angeforderten Daten, als (Quasi-) Identifikatoren ausgezeichnete Attribute, als (Quasi-)Targets ausgezeichnete Attribute und oder eine Liste von genehmigten Prüfungskriterien für jedes Attribut übergeben. Der Output erfolgt in Form eines Reports mit den jeweiligen Auswertungen pro Attribut. Dieser Report dient als Diskussionsgrundlage für die Datenfreigabe. Ein möglicher weiterer Output ist eine bereits den Prüfungsergebnissen entsprechend reduzierte Datenmenge, etwa durch Entfernung von Attributen, die sehr hoch mit dem Identifikator korrelieren oder die keinerlei Korrelation mit dem Target aufweisen.

In einer bevorzugten Ausführungsform der Erfindung wird durch die Recheneinheit ein Report über die Testergebnisse generiert und bereitgestellt. Dieser Report kann die Grundlage einer automatisierten Weiterleitung der Daten sein, aber auch dazu dienen, dass Personen die Qualität der Pseudonymisierung abschätzen, dokumentieren und/oder überprüfen können.

Gemäß einem weiteren Aspekt der Erfindung wird ein System zur automatisierten Überprüfung der Qualität von pseudonymisierten Datensätzen angegeben, welches zur Durchführung des vorstehend beschriebenen Verfahrens eingerichtet und geeignet ist.

Im Folgenden werden bevorzugte Ausführungsbeispiele der vorliegenden Erfindung unter Bezugnahme auf die begleitenden Figuren erläutert:
- Fig. 1:: zeigt das erfindungsgemäße Verfahren zur automatisierten Überprüfung der Qualität von pseudonymisierten Daten.
- Fig. 2:: zeigt die Verwendung weiterer Daten bei der Überprüfung der Qualität der pseudonymisierten Daten.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

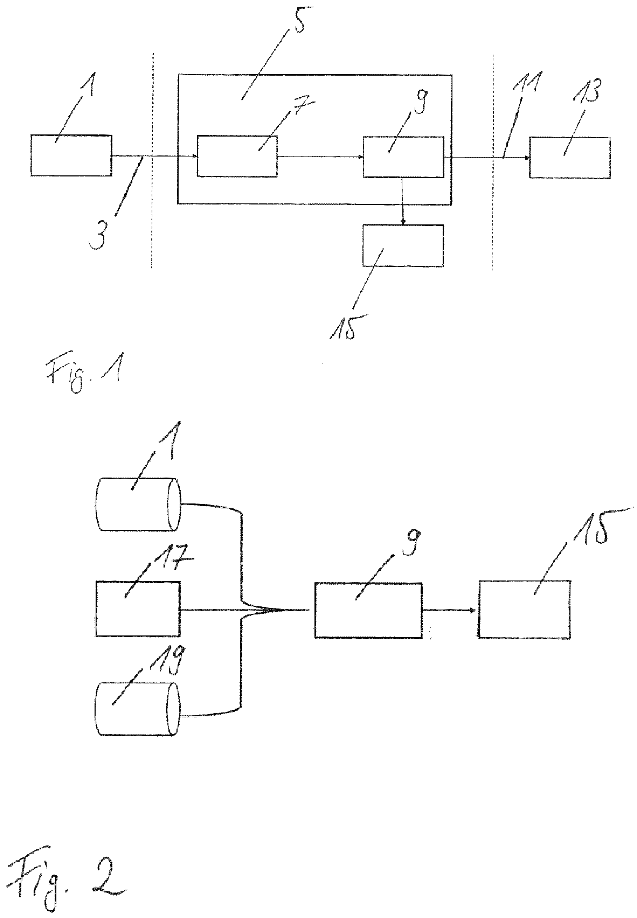

Fig. 1 schematisch den Ablauf des erfindungsgemäßen Verfahrens auf einer Rechnereinheit. Die ursprünglich erhobenen Originaldaten, die personenbezogene Informationen aufweisen, werden auf einem Quelldatensystem 1 das der Rechnereinheit zugeordnet ist, hinterlegt. Diese Originaldaten und die nachfolgende Prüfung, betreffen nicht nur Kundendaten, sondern gegebenenfalls auch Mitarbeiterdaten. Es ist keine Voraussetzung der erfinderischen Lehre, dass diese Daten in einem klassischen Datenbanksystem zur Verfügung gestellt werden müssen.

Die Originaldaten werden beispielsweise von einem Kunden angefordert und über eine sichere Schnittstelle 3 aus dem Quelldatensystem 1 in eine Datenschutzprüfumgebung 5 der Rechnereinheit übertragen. Diese Datenschutzprüfumgebung 5 kann auf der Rechnereinheit temporär oder dauerhaft als gesicherte Umgebung zur Überprüfung der Datenschutzbestimmungen eingerichtet sein. Als Input werden die Quelldaten einem Pseudonymisierungs-Modul 7, beispielsweise einem Encoder, übergeben das die Originaldaten nach einem im Vorfeld wählbaren Verfahren pseudonymisiert. Nach dieser Pseudonymisierung werden die Daten zur Prüfung der Anonymitätsgüte an ein Testmodul 9 weitergeleitet. Auf diesem Testmodul 9 werden die Attribute der pseudonymisierten Daten in einem maschinellen Lernverfahren durch eine Überanpassung ("Overfitting") ermittelt. Das maschinelle Lernverfahren wird hierbei durch entsprechend voreingestellte Parameter zu einem hohen Overfitting "gezwungen". Der Auftrag des Testmoduls 9 ist es als Target eine Einzelperson zu identifizieren. Hierbei wird über eine Stichprobe bzw. über alle Einzelpersonen aus Originaldaten iteriert.

Hierbei kommen zwei Szenarien in Betracht:
a) Wird eine einmalige Datenlieferung, also beispielsweise eine einmalige Anfrage eines Kunden, betrachtet, soll das Overfitting maximal sein. Insbesondere wird das maschinelle Lernverfahren auf dem gesamten Datensatz der pseudonymisierten Daten auf dem Testmodul 9 trainiert - hierbei wird absichtlich auf eine Validierung durch Testdaten verzichtet. Ist das Verfahren in der Lage, die jeweilige Einzelperson mit einer Trefferwahrscheinlichkeit von mindestens 1/k zu identifizieren, verletzen die Daten die k-Anonymität.
   Ist kein gängiges Verfahren, insbesondere kein maschinelles Lernverfahren, in der Lage eine solch hohe Trefferwahrscheinlichkeit zu erzielen, ist die k-Anonymität de facto gewahrt und die Daten können direkt für den Verwendungszweck über eine weitere Schnittstelle 11 an den Kunden zu einer Auswertung bzw. Datenanalyse 13 freigegeben und weitergeleitet. Für diese Datenschutzanalyse kommt als Lernverfahren insbesondere ein Entscheidungsbaum, der ohne Pruning sämtliche Attribute einbezieht, infrage, da hiermit die Wiederidentifizierbarkeit strikt ausgeschlossen werden kann.
b) Soll die Freigabe auch zukünftige Datenlieferungen einschließen - also mehrmals durchführbar sein - kann zusätzlich ein Modell trainiert werden, bei dem das Overfitting nicht maximal ist. Durch Validierungsverfahren kann dann überprüft werden, wie stabil die pseudonymisierten Daten die Wiederidentifizierbarkeit bezüglich der Originaldaten ausschließen.

Das maschinelle Lernverfahren läuft hierbei ohne menschliches Zutun auf einer stark geschützten Umgebung ab, wodurch sichergestellt ist, dass ein Zugriff auf die Daten nur dann möglich ist, wenn der Test bezüglich der Anonymität erfolgreich bestanden wurde. Das Testmodul 9 kreiert zusätzlich einen Testbericht 15 und stellt diesen zur Ansicht bereit.

Als Input für das Testmodul 9 kommen die Originaldaten, die pseudonymisierten Daten, als Identifikator ausgezeichnete Attribute, also das Target-Attribute 17, allgemein verfügbare Zensusdaten 19 und/oder prinzipiell alle weiteren verfügbaren Daten in Betracht. Je mehr unterschiedliche Datensätze vorhanden sind, desto höher ist die Wahrscheinlichkeit, dass aufgrund dieser Daten eindeutig auf eine Person aus dem Originaldatensatz durch das Test-Modul 9 geschlossen werden kann. Dies ist schematisch in Fig. 2 gezeigt.

Der Testbericht 15 liefert Informationen, ob die Prüfung bezüglich der K-Anonymität bestanden wurde oder nicht. Optional können (unter Beachtung von Datenschutzvorgaben) weitere Eigenschaften der angelernten Modelle ausgegeben werden, lieber eine Einschätzung der Qualität der Pseudonymisierung helfen. Des Weiteren kann der Report ausgeben, ob bei einem negativen Prüfergebnis eine weitere Anpassung der Datenmenge also eine weitere Pseudonymisierung zu erfolgen hat. Hierzu zählt beispielsweise eine Auswertung, welche Trefferwahrscheinlichkeit bei jeder Iteration/Einzelperson erzielt wurde.

## Patentansprüche

1. Verfahren zur automatisierten Überprüfung der Güte von pseudonymisierten Datensätzen
wobei ein erster Datensatz ursprünglich erhobener Originaldaten, die eine Zuordnung eines in dem Datensatz enthaltenen Objekts mit dessen Attributen aufweisen auf einer Rechnereinheit hinterlegt werden,
wobei ein zweiter Datensatz von pseudonymisierten Daten, der aus dem ersten Datensatz der Originaldaten erzeugt wurde, ebenfalls auf der Rechnereinheit hinterlegt wird,
wobei ein Algorithmus auf der Rechnereinheit verwendet wird, um die Güte der pseudonymisierten Daten automatisiert zu überprüfen,
**dadurch gekennzeichnet,**
**dass** der Algorithmus ein maschinelles Lernverfahren aufweist,
wobei das maschinelle Lernverfahren durch eine Überanpassung von Parametern, ein sogenanntes Overfitting, mögliche kritische Attribute aus den pseudonymisierten Datenermittelt und
**dass** der Algorithmus durch einen Test die Güte der pseudonymisierten Datensätzen überprüft.

2. Verfahren nach Anspruch 1, **dadurch gekennzeichnet, dass** der Test überprüft, ob aus den ermittelten Attributen ein Rückschluss auf die Originaldaten möglich ist.

3. Verfahren nach Anspruch 2, **dadurch gekennzeichnet, dass** der Test zur Überprüfung des Rückschlusses auf die Originaldaten alle möglichen Kombinationen der ermittelten Attribute kombiniert und mit Einträgen aus den Originaldaten vergleicht.

4. Verfahren nach einem der vorhergehenden Ansprüche, **dadurch gekennzeichnet, dass** der Test als bestanden gilt, wenn die Originaldaten mit einer Trefferwahrscheinlichkeit von kleiner als 1/k, bezüglich einer k-Anonymität, identifiziert werden.

5. Verfahren nach einem der vorhergehenden Ansprüche, **dadurch gekennzeichnet, dass** die Rechnereinheit eine sichere Datenschutzprüfumgebung ausbildet.

6. Verfahren nach einem der vorhergehenden Ansprüche, **dadurch gekennzeichnet, dass** die Rechnereinheit eine Schnittstelle zur Weiterleitung der pseudonymisierten Daten aufweist und dass die pseudonymisierten Daten über die Schnittstelle weitergeleitet werden, wenn der Test bestanden wird.

7. Verfahren nach einem der vorhergehenden Ansprüche, **dadurch gekennzeichnet, dass** das Overfitting, insbesondere innerhalb eines Parameterbereichs eines bereitgestellten mathematischen Models, maximal gewählt wird.

8. Verfahren nach einem der vorhergehenden Ansprüche, **dadurch gekennzeichnet, dass** die Attribute Originaldaten vor der Pseudonymisierung im Hinblick auf Ihre Aussagekraft von dem Algorithmus analysiert werde und gegebenfalls vor der Pseudonym isierung reduziert werden.

9. Verfahren nach einem der vorhergehenden Ansprüche, **dadurch gekennzeichnet, dass** der Algorithmus einen Report über seine Ergebnisse generiert und bereitstellt.

10. System zur automatisierten Überprüfung der Güte von pseudonymisierten Datensätzen und deren Freigabe eingerichtet zur Durchführung eines der vorhergehenden Verfahren.

## Claims

1. Method for the automated examination of the quality of pseudonymised datasets
wherein a first dataset of initially collected original data, which data includes an assignment of an object contained in the dataset together with the attributes thereof, are stored on a computer unit,
wherein a second dataset of pseudonymised data, which was generated from the first dataset of the original data, is also stored on the computer unit,
wherein an algorithm on the computer unit is used to examine the quality of the pseudonymised data in automated manner,
**characterized in that**
the algorithm includes a machine learning method,
wherein the machine learning method detects possible critical attributes from the pseudonymised data by overadaptation of parameters, called "overfitting", and that the algorithm examines the quality of the pseudonymised datasets with a test.

2. Method according to Claim 1, **characterized in that** the test examines whether it is possible to draw an inference to the original data from the detected attributes.

3. Method according to Claim 2, **characterized in that** the test for examining the inference to the original data combines all possible combinations of the detected attributes and compares them with entries from the original data.

4. Method according to any one of the preceding claims, **characterized in that** the test is considered to have been passed if the original data is identified with a hit probability of less than 1/k relative to a k-anonymity.

5. Method according to any one of the preceding claims, **characterized in that** the computer unit forms a secure privacy-preserving framework.

6. Method according to any one of the preceding claims, **characterized in that** the computer unit includes an interface for forwarding the pseudonymised data, and that the pseudonymised data is forwarded via the interface if the test is passed.

7. Method according to any one of the preceding claims, **characterized in that** the overfitting is chosen maximally, particularly within a parameter range of a provided mathematical model.

8. Method according to any one of the preceding claims, **characterized in that** the attributes original data are analysed with respect to their informative value by the algorithm prior to pseudonymisation and are optionally reduced before the pseudonymisation.

9. Method according to any one of the preceding claims, **characterized in that** the algorithm generates and delivers a report on its results.

10. System for the automated examination of the quality of pseudonymised datasets and the release thereof, configured to execute one of the preceding methods.

## Revendications

1. Procédé de vérification automatisée de la qualité d'ensembles de données pseudonymisées,
dans lequel un premier ensemble de données originales obtenues à l'origine, qui comprend l'attribution d'un objet contenu dans l'ensemble de données à ses attributs est stocké sur une unité informatique et
dans lequel un deuxième ensemble de données pseudonymisées, qui est généré à partir du premier ensemble de données originales, est également stocké sur cette unité informatique,
dans lequel un algorithme exécuté sur l'unité informatique est utilisé pour vérifier automatiquement la qualité des données pseudonymisées,
**caractérisé en ce que**
l'algorithme comprend un procédé d'apprentissage automatique,
dans lequel le procédé d'apprentissage automatique, par surapprentissage des paramètres, désigné comme le surapprentissage détermine les attributs critiques potentiels à partir des données pseudonymisées et l'algorithme vérifie la qualité des ensembles de données pseudonymisées au moyen d'un test.

2. Procédé selon la revendication 1, **caractérisé en ce que** le test vérifie s'il est possible de déduire les données originales à partir des attributs déterminés.

3. Procédé selon la revendication 2, **caractérisé en ce que** le test de vérification de l'inférence aux données originales combine toutes les combinaisons possibles des attributs déterminés et les compare aux entrées des données originales.

4. Procédé selon une quelconque des revendications précédentes, **caractérisé en ce que** le test est considéré comme réussi si les données originales sont identifiées avec une probabilité de correspondance inférieure à 1/k par rapport à un k-ième anonymat.

5. Procédé selon une quelconque des revendications précédentes, **caractérisé en ce que** l'unité de calcul établit un environnement de test de protection de données sécurisé.

6. Procédé selon une quelconque des revendications précédentes, **caractérisé en ce que** l'unité de calcul présente une interface pour la transmission des données pseudonymisées et que les données pseudonymisées sont transmises via l'interface si le test est réussi.

7. Procédé selon une quelconque des revendications précédentes, **caractérisé en ce que** le surapprentissage, en particulier dans une plage de paramètres d'un modèle mathématique fourni, est sélectionné au maximum.

8. Procédé selon une quelconque des revendications précédentes, **caractérisé en ce que** les attributs des données originales sont analysés par l'algorithme quant à leur valeur informative avant la pseudonymisation et sont le cas échéant réduits avant la pseudonymisation.

9. Procédé selon une quelconque des revendications précédentes, **caractérisé en ce que** l'algorithme génère et fournit un rapport sur ses résultats.

10. Système de vérification automatisée de la qualité des ensembles de données pseudonymisées et de leur diffusion, conçu pour mettre en œuvre un quelconque des procédés précédents.
